# EUROPÄISCHE PATENTSCHRIFT

(11) **EP 1 654 196 B1**
(45) Veröffentlichungstag und Bekanntmachung des Hinweises auf die Patenterteilung: **28.09.2011**
(21) Anmeldenummer: 04741261.4
(22) Anmeldetag: 24.07.2004
(51) Int. Cl.: C01B 31/08

(54) **HERSTELLUNG VON AKTIVKOHLE**
ACTIVATED CHARCOAL PRODUCTION
FABRICATION DE CHARBON ACTIF

(30) Priorität: 11.08.2003 DE 10337100; 20.09.2003 DE 10343637
(43) Veröffentlichungstag der Anmeldung: 10.05.2006
(73) Patentinhaber: Blücher GmbH, 40699 Erkrath (DE)
(72) Erfinder: DE RUITER, Ernest, 51381 Leverkusen (DE); METZ,Joachim, D-35683 Dillenburg (DE)
(74) Vertreter: Gesthuysen, von Rohr & Eggert
(86) Internationale Anmeldenummer: PCT/EP2004/008314
(87) Internationale Veröffentlichungsnummer: WO 2005/016819

(56) Entgegenhaltungen:
- WO-A-01/02295
- WO-A-01/83368
- DE-A- 19 912 154
- US-A- 4 439 209

## Beschreibung

Die vorliegende Erfindung betrifft ein Verfahren zur Herstellung von Aktivkohle, insbesondere in Kornform ("Kornkohle), vorzugsweise in Kugelform ("Kugelkohle"), sowie die auf diese Weise hergestellten Aktivkohleprodukte und ihre Verwendung für verschiedene Anwendungen, insbesondere für Filter oder für Schutzmaterialien, wie beispielsweise Schutzanzüge.

Aktivkohle ist aufgrund ihrer recht unspezifischen adsorptiven Eigenschaften das am meisten angewandte Adsorbens. Gesetzliche Auflagen, aber auch das steigende Bewußtsein der Verantwortung für die Umwelt, führen zu einem steigenden Bedarf an Aktivkohle.

Aktivkohle wird im allgemeinen durch Schwelung (synonym auch als "Carbonisierung" oder "Pyrolyse" bezeichnet) und anschließende Aktivierung kohlenstoffhaltiger Verbindungen erhalten, wobei solche Ausgangsverbindungen bzw. Edukte bevorzugt werden, die zu ökonomisch vernünftigen Ausbeuten führen, denn die Gewichtsverluste durch Abspalten flüchtiger Bestandteile beim Schwelen und durch den Abbrand beim Aktivieren sind erheblich. Für weitere Einzelheiten der Aktivkohleherstellung kann beispielsweise verwiesen werden auf H. v. Kienle und E. Bäder, Aktivkohle und ihre industrielle Anwendung, Enke Verlag Stuttgart, 1980.

Aber auch die Beschaffenheit der erzeugten Aktivkohle - fein- oder grobporig, fest oder brüchig - hängt vom Ausgangsmaterial ab. Übliche Ausgangsmaterialien sind z. B. Kokosnußschalen, Holzabfälle, Torf, Steinkohle, Peche, aber auch besondere Kunststoffe, die unter anderem bei der Herstellung von Aktivkohlegeweben eine gewisse Rolle spielen.

Aktivkohle wird in verschiedenen Formen verwendet: Pulverkohle, Splitterkohle, Kornkohle, Formkohle und seit Ende der siebziger Jahre auch kugelförmige Aktivkohle ("Kugelkohle"), daneben auch als faserförmige Aktivkohle ("Faserkohle", z. B. in Form von Gewirken). Insbesondere die kugelförmige Aktivkohle hat gegenüber anderen Formen von Aktivkohle, wie Pulver-, Splitter-, Kornkohle und dergleichen, eine Reihe von Vorteilen, die sie für bestimmte Applikationen wertvoll oder sogar unverzichtbar macht: Sie ist rieselfähig, enorm abriebfest (staubfrei) und sehr hart. Wegen des hohen Preises beschränkt sich aber ihr Einsatz im wesentlichen auf Schutzanzüge und hochwertige Filter für Schadstoffe in Luftströmen.

Kornkohle, insbesondere Kugelkohle, ist wegen ihrer speziellen Form, aber auch wegen der extrem hohen Abriebfestigkeit, beispielsweise für besondere Einsatzgebiete, wie z. B. Flächenfilter für Schutzanzüge gegen chemische Gifte und Filter für niedrige Schadstoffkonzentrationen in großen Luftmengen, sehr gefragt. So kann beispielsweise bei der Beladung von retikulierten, großporigen Polyurethanschäumen mit Aktivkohle z. B. gemäß der DE 38 13 563 A1 nur eine gut rieselfähige Kohle eingesetzt werden, wenn auch die inneren Schichten des Schaumstoffmaterials optimal belegt werden sollen. Bei der Herstellung von Schutzanzügen gegen chemische Gifte in Anlehnung z. B. an die DE 33 04 349 C3 beispielsweise kann ebenfalls nur eine hoch abriebfeste Kohle eingesetzt werden, und nur Kugelkohle erfüllt diese Anforderung.

Kugelkohle wird heute noch meist durch mehrstufige und sehr aufwendige Verfahren hergestellt. Das bekannteste Verfahren besteht in der Herstellung von Kügelchen aus Steinkohlenteerpech und geeigneten asphaltartigen Rückständen der Erdölchemie, welche oxidiert - damit sie unschmelzbar werden -, geschwelt und aktiviert werden. Beispielsweise kann die Kugelkohle auch in einem mehrstufigen Verfahren ausgehend von Bitumen hergestellt werden. Diese mehrstufigen Verfahren sind sehr kostenintensiv, und der damit verbundene hohe Preis dieser Kugelkohle verhindert viele Anwendungen, bei denen die Kugelkohle aufgrund ihrer Eigenschaften eigentlich bevorzugt werden müßte.

Folglich wurde auf verschiedenste Art und Weise versucht, hochwertige Kugelkohle auf anderem Wege herzustellen:
Aus dem Stand der Technik bekannt ist die Herstellung von Kugelkohle durch Schwelung und anschließende Aktivierung von neuen oder gebrauchten lonenaustauschern, die Sulfonsäuregruppen enthalten, bzw. durch Schwelung von Ionenaustauschervorstufen in Gegenwart von Schwefelsäure und anschließende Aktivierung, wobei die Sulfonsäuregruppen bzw. die Schwefelsäure die Funktion eines Vernetzers haben, wobei die Ausbeuten - unabhängig davon, ob von fertigen Kationenaustauscherharzen oder von unsulfonierten Ionenaustauschervorstufen ausgegangen wird - etwa 30 bis 50 % betragen, bezogen auf organisches bzw. polymeres Ausgangsmaterial. Solche Verfahren sind beispielsweise in der DE 43 28 219 A1 und in der DE 43 04 026 A1 sowie in der DE 196 00 237 A1 einschließlich der deutschen Zusatzanmeldung DE 196 25 069 A1 beschrieben. Nachteilig und problematisch bei diesen Verfahren sind aber insbesondere die großen Mengen an freigesetztem Schwefeldioxid - pro kg Endprodukt etwa 1 kg SO₂ - sowie die damit unter anderem verbundenen Korrosionsprobleme in den Herstellapparaturen. Bei der Verwendung gebrauchter Ionenaustauscherharze, insbesondere gebrauchter Kationenaustauscherharze, als Ausgangsmaterialien besteht zudem das Problem, daß diese - trotz einer Wäsche mit Säure - mit Kationen, die sich dann im Endprodukt anreichern, verunreinigt sind, so daß die Herstellung größerer Mengen Kugelkohle in gleichbleibender Qualität folglich sehr schwierig ist. Bei der Verwendung von Ionenaustauschervorstufen - also Polymerkügelchen ohne Austauschergruppen (Sulfonsäuregruppen) - sind zudem große Mengen von Schwefelsäure und/oder Oleum für die Vernetzung während der Schwelung erforderlich.

In der WO 98/07655 A1 wird ein Verfahren zur Herstellung von Aktivkohlekügelchen beschrieben, bei dem zunächst eine Mischung, die einen aus der Diisocyanatherstellung stammenden Destillationsrückstand, einen kohlenstoffhaltigen Verarbeitungshilfsstoff und gegebenenfalls einen oder mehrere weitere Zusatzstoffe umfaßt, zu rieselförmigen Kügelchen verarbeitet wird und anschließend die auf diese Weise erhaltenen Kügelchen geschwelt und dann aktiviert werden. Auch bei diesem Verfahren werden bei der Schwelung stoßweise große Mengen an Zersetzungsprodukten freigesetzt, was mit den zuvor geschilderten Problemen verbunden ist.

Die WO 01/83368 A1 beschreibt ein Verfahren zur Herstellung kugelförmiger Aktivkohle durch Schwelung und Aktivierung von Polymerkügelchen auf Basis von Styrol und Divinylbenzol, die chemische Gruppen, welche bei ihrer thermischen Zersetzung zu freien Radikalen und somit zu Vernetzungen führen, insbesondere Sulfonsäuregruppen, enthalten, wobei die Polymerkügelchen zunächst kontinuierlich vorgeschwelt und anschließend diskontinuierlich nachgeschwelt und aktiviert werden. Die zweistufige Durchführung der Schwelung als Vor- und Nachschwelung ist, oftmals bedingt durch apparative Gegebenheiten, nicht immer realisierbar.

Das der vorliegenden Erfindung zugrunde liegende Problem besteht in der Bereitstellung eines Verfahrens, welches eine effiziente Herstellung von Aktivkohle, insbesondere in Korn- bzw. Kugelform, ermöglicht. Dabei soll das Verfahren eine weniger aufwendige, insbesondere eine möglichst wenig kostenintensive Herstellung von Aktivkohle ermöglichen.

Die Anmelderin hat nun überraschenderweise herausgefunden, daß das der vorliegenden Erfindung zugrunde liegende Problem gelöst werden kann, indem man die bei der Herstellung von kornförmiger, insbesondere kugelförmiger Aktivkohle ausgehend von geeigneten kohlenstoffhaltigen Polymeren (z. B. organischen Polymeren) als Ausgangsmaterial, welche durch Schwelung zumindest im wesentlichen zu Kohlenstoff umgesetzt werden können, den Verfahrensschritt der Schwelung dadurch bewirkt, daß man das Ausgangsmaterial kontinuierlich durch eine mehrere Temperaturzonen (Reaktionszonen) bzw. einen Temperaturgradienten umfassende Schwelvorrichtung bewegt derart, daß eine zumindest im wesentlichen vollständige Umsetzung des Ausgangsmaterials zu (elementarem) Kohlenstoff bewirkt wird.

Gegenstand der vorliegenden Erfindung ist somit ein Verfahren nach Anspruch 1.

Das grundlegendes Prinzip der vorliegenden Erfindung besteht somit darin, den gesamten Schwelvorgang mit seinen verschiedenen, bei unterschiedlichen Temperaturen durchzuführenden Verfahrensstufen bzw. -abschnitten in nur einer einzigen Vorrichtung durchzuführen, welche zu diesem Zweck vorschlagsgemäß mehrere Temperaturzonen bzw. einen Temperaturgradienten aufweisen muß. Auf diese Weise kann der Schwelvorgang kontinuierlich, d. h. ohne Unterbrechung, insbesondere ohne einen Wechsel der Apparatur, durchgeführt werden, was eine nicht unwesentliche Vereinfachung und Effizienzsteigerung bei der Verfahrensdurchführung ermöglicht, verbunden mit ökonomischen Einsparungen.

Die Temperaturzonen bzw. der Temperaturgradient einerseits und andererseits die Geschwindigkeit, mit der das Ausgangsmaterial durch die Schwelvorrichtung bewegt wird, müssen derart ausgewählt, insbesondere derart aufeinander abgestimmt sein, daß eine zumindest im wesentlichen vollständige Umsetzung des carbonsierbaren Ausgangsmaterials zu Kohlenstoff bewirkt wird. Durch die Anordnung und Auswahl der Beschaffenheit der Temperaturzonen bzw. des Temperaturgradienten im Zusammenspiel mit der Geschwindigkeit, mit der das Ausgangsmaterial durch die Schwelvorrichtung bewegt wird, läßt sich der erfindungsgemäße Verfahrensablauf gezielt steuern bzw. beeinflussen.

Im allgemeinen erfolgt die Beförderung des Ausgangsmaterials gemäß der vorliegenden Erfindung in der Weise, daß das Ausgangsmaterial kontinuierlich mittels einer Transport- oder Fördereinrichtung, insbesondere eines bewegten Transport- oder Förderbandes, durch die Temperaturzonen und/oder den Temperaturgradienten der Schwelvorrichtung bewegt wird in der Art, daß eine zumindest im wesentlichen vollständige Umsetzung des Ausgangsmaterials zu Kohlenstoff bewirkt wird. Dabei muß die Geschwindigkeit des Förderbandes dem Temperaturprofil der Temperaturzonen bzw. des Temperaturgradienten angepaßt werden und/oder umgekehrt.

Zur Durchführung des erfindungsgemäßen Verfahrens als Schwelvorrichtung bewährt hat sich beispielsweise ein kontinuierlich arbeitendes Drehrohr bzw. ein kontinuierlich arbeitender Drehrohrofen; hier kann das Beladungsgut, d. h. das carbonisierbare Ausgangsmaterial, mittels einer geeigneten Transport- oder Fördereinrichtung durch das Drehrohr bzw. durch den Drehrohrofen befördert bzw. transportiert werden, z. B. durch geeignete Vortriebskörper, wie z. B. eine Förderschnecke. Gleichermaßen ist es möglich, den Transport bzw. die Förderung des Beladungsgutes durch entsprechende Neigung des Drehrohres bzw. des Drehrohrofens vorzusehen. Gleichermaßen ist es möglich, eine Kombination der vorgenannten Maßnahmen zum Transport bzw. zur Förderung des Beladungsgutes durch das Drehrohr bzw. durch den Drehrohrofen vorzusehen.

Zur Durchführung des erfindungsgemäßen Verfahrens als Schwelvorrichtung besonders bewährt hat sich ein sogenannter Bandofen, insbesondere ein sogenannter Oxidationsbandofen. Derartige Systeme werden von zahlreichen Firmen vertrieben, z. B. von der Fa. Sarnes Ingenieure, Ostfildern, Deutschland, und umfassen im allgemeinen eine kombinierte Einheit aus Transport-/Förderband einerseits und Ofen/Heizvorrichtung andererseits, wobei das im Ofen bzw. in der Heizeinrichtung zu behandelnde Material über das Transport-/Förderband durch das Innere das Ofens bzw. der Heizeinrichtung transportiert bzw. gefördert werden kann.

Als Ausgangsmaterialien für die erfindungsgemäße Herstellung von Aktivkohle eignen sich (ver)schwelbare bzw. carbonisierbare Polymere, d. h. kohlenstoffhaltige Polymere, die sich durch Pyrolyse bzw. Schwelung zumindest im wesentlichen zu elementarem Kohlenstoff umsetzen lassen.

Die Form bzw. Gestalt des polymeren Ausgangsmaterials bleibt im allgemeinen bei der Schwelung zumindest im wesentlichen bzw. weitgehend erhalten (wobei allerdings durch die Schwelung und gegebenenfalls nachfolgende Aktivierung eine Reduzierung der Teilchengröße bzw. des Teilchendurchmessers eintritt). Folglich muß zur Herstellung von Aktivkohle in Kornform, insbesondere in Kugelform, auch von Polymerkörnern bzw. -kügelchen, d. h. Polymeren in Korn- oder Kugelform bzw. annähernd in Korn- oder Kugelform, ausgegangen werden (Im allgemeinen besitzen die erfindungsgemäß eingesetzten Polymerkörner bzw. -kügelchen Durchmesser von bis zu etwa 2 mm, insbesondere von bis zu etwa 1,5 mm oder weniger.). Auch die Teilchengröße der erhaltenen Korn- bzw. Kugelkohle hängt von der Größe der Körnchen bzw. Kügelchen im Ausgangsmaterial ab. Handelsübliche Ausgangsprodukte führen im allgemeinen zu Aktivkohlekörnern bzw. -kügelchen von etwa 0,1 mm bis etwa 2,0 mm Durchmesser, insbesondere etwa 0,2 mm bis etwa 1,0 mm, vorzugsweise etwa 0,3 mm bis etwa 0,8 mm, mit Mittelwerten von etwa 0,4 mm bis etwa 0,6 mm.

Das polymere Ausgangsmaterial kann beispielsweise in poröser, insbesondere makroporöser, und/oder gelförmiger Form vorliegen. Im Falle von gelförmigen Ausgangsmaterialien werden mikroporöse Polymerteilchen bevorzugt eingesetzt. Bevorzugt werden makroporöse oder mikroporöse gelförmige Ausgangsmaterialien. Aufgrund der Tatsache, daß die Form bzw. Gestalt des polymeren Ausgangsmaterials im allgemeinen bei der Schwelung zumindest im wesentlichen bzw. weitgehend erhalten bleibt, lassen sich die Eigenschaften, insbesondere die Morphologie (z. B. Porosität), der geschwelten Produkte durch die gezielte Auswahl des Ausgangsmaterials steuern bzw. beeinflussen. So bestimmt beispielsweise die Porosität des Ausgangsmaterials auch die Porosität der geschwelten Produkte.

Als Ausgangsmaterialien können beispielsweise organische Polymerkörnchen bzw. -kügelchen verwendet werden, die ein im wesentlichen aus Polystyrol bestehendes Polymerskelett besitzen, wobei die Polystyrolketten mittels einer Komponente mit mindestens zwei Vinylgruppen pro Molekül, insbesondere Divinylbenzol, stellenweise verbunden bzw. vernetzt sein können und das Polymerskelett funktionelle chemische Gruppen, die bei ihrer thermischen Zersetzung zu freien Radikalen und somit zu Vernetzungen führen, insbesondere Sulfonsäuregruppen, enthalten können. Insbesondere handelt es sich bei dem für die erfindungsgemäße Herstellung der korn- bzw. kugelförmigen Aktivkohle verwendeten Ausgangsmaterial um organische Polymerkörnchen bzw. -kügelchen auf Basis von mit Divinylbenzol vernetztem Polystyrol, die funktionelle chemische Gruppen, insbesondere saure Gruppen wie Sulfonsäuregruppen, welche bei ihrer thermischen Zersetzung zu freien Radikalen und somit zu Vernetzungen führen, enthalten; dabei kann der Divinylbenzolgehalt, bezogen auf die Polymerkügelchen, bis zu etwa 20 Gew.-%, insbesondere bis zu etwa 15 Gew.-%, vorzugsweise bis zu etwa 10 Gew.-%, betragen. Anstelle von Divinylbenzol kann zur Vernetzung des Polystyrols aber auch eine vergleichbare, zur Vernetzung von Polystyrol geeignete, organische, insbesondere aromatische organische Verbindung mit mindestens zwei vernetzenden Gruppen, insbesondere Vinylgruppen, pro Molekül eingesetzt werden.

Das Gewichtsverhältnis von Polymeren zu bei ihrer thermischen Zersetzung zu freien Radikalen und somit zu Vernetzungen führenden chemischen Gruppen, insbesondere das Gewichtsverhältnis von Polymeren zu Sulfonsäuregruppen, kann dabei in weiten Grenzen variieren; vorteilhafterweise liegt es im allgemeinen im Bereich von etwa 5 : 1 bis etwa 1 : 1, insbesondere etwa 2 : 1 bis etwa 1 : 1. Dennoch ist es möglich von den genannten Werten abzuweichen.

Gemäß einer ersten Ausführungsform des erfindungsgemäßen Verfahrens besteht eine Möglichkeit darin, daß die zu Vernetzungen führenden chemischen Gruppen, insbesondere stark sauren Gruppen wie Sulfonsäuregruppen, bereits im Ausgangsmaterial vorhanden sind.

Nichtbeschränkende Beispiele für polymere Ausgangsmaterialien, bei denen die bei der Schwelung bzw. Pyrolyse zu Vernetzungen führenden, chemischen funktionellen Gruppen, insbesondere Sulfonsäuregruppen, bereits im eigentlichen Ausgangsmaterial vorhanden sind, sind Ionenaustauscherharze, insbesondere stark saure Kationenaustauscherharze, wie Kationenaustauscherharze mit Sulfonsäuregruppen. Dabei kann es sich um ungebrauchte oder aber auch gebrauchte Ionenaustauscherharze handeln. Im Falle gebrauchter Kationenaustauscher können diese mit Metallionen verunreinigt sein, die dann im Endprodukt als katalytische Metallimprägnierung vorhanden sind. Für den Fall, daß von gebrauchten bzw. verbrauchten Ionenaustauschern ausgegangen wird, betrifft die vorliegende Erfindung gleichsam ein Verfahren zur Entsorgung gebrauchter bzw. verbrauchter Ionenaustauscher. Mit dem erfindungsgemäßen Verfahren können nämlich die zu entsorgenden, gebrauchten Ionenaustauscher in ein nützliches Produkt - Aktivkohle - umgesetzt werden, welches durch seine Eigenschaft, Umweltgifte zu adsorbieren, zum Umweltschutz beiträgt.

Ein weiteres Beispiel für polymere Ausgangsmaterialien, bei denen die bei der Schwelung bzw. Pyrolyse zu Vernetzungen führenden, chemischen funktionellen Gruppen, insbesondere Sulfonsäuregruppen, bereits im eigentlichen Ausgangsmaterial vorhanden sind, sind saure organische Katalysatoren, beispielsweise Katalysatoren für die Bisphenolsynthese oder für die MTBE-Synthese (MTBE = Methyl-tert.-Butylether), vorzugsweise Sulfonsäuregruppen enthaltende organische Katalysatoren. Besonders bevorzugt werden saure organische Katalysatoren der zuvor beschriebenen Art, welche porös und/oder gelförmig sein können. Die Anmelderin hat nämlich überraschenderweise herausgefunden, daß beispielsweise die bei der MTBE- oder Bisphenolsynthese anfallenden, inaktiv gewordenen, sauren organischen Katalysatoren ein gutes Ausgangsmaterial für die Herstellung von Korn- bzw. Kugelkohle sind. Das aus dem Reaktor zur Bisphenol- oder zur MTBE-Synthese stammende korn- bzw. kugelförmige Katalysatormaterial kann dann - gegebenenfalls nach Wäsche und Trocknung - in erfindungsgemäßer Weise geschwelt und gegebenenfalls aktiviert werden. Noch anhaftendes Phenol im Fall von Katalysatoren aus der Bisphenolsynthese wird bei der Schwelung bzw. Pyrolyse zerstört oder/und in der Nachschwelung verbrannt. Die Ausbeuten an Aktivkohlekörnchen bzw. -kügelchen sind im Fall der organischen Katalysatoren ähnlich wie bei Kationenaustauschern. Im Gegensatz zu gebrauchten Ionenaustauschern ist aber bei gebrauchten organischen Katalysatoren keine Anreicherung von Kationen in der Kohle zu berücksichtigen. Erfindungsgemäß lassen sich als Ausgangsmaterialien also ohne weiteres die verbrauchten bzw. erschöpften, als Abfall anfallenden, sauren organischen Katalysatoren aus der MTBE-Synthese oder aus der Synthese von Bisphenol aus Phenol und Aceton einsetzen und auf diese Weise entsorgen. Für den Fall, daß von verbrauchten bzw. inaktiv gewordenen, sauren, polymeren organischen Katalysatoren auf Basis von Styrol und Divinylbenzol, insbesondere aus der MTBE- oder aus der Bisphenolsynthese, ausgegangen wird, betrifft die vorliegende Erfindung gleichsam ein Verfahren zur Entsorgung verbrauchter bzw. inert gewordener Katalysatoren. Mit dem erfindungsgemäßen Verfahren können die zu entsorgende Abfälle in ein nützliches Produkt - Aktivkohle - umgesetzt werden, welches durch seine Eigenschaft, Umweltgifte zu adsorbieren, zum Umweltschutz beiträgt.

Auch wenn die zu Vernetzungen führenden chemischen Gruppen, insbesondere stark sauren Gruppen wie Sulfonsäuregruppen, bereits im Ausgangsmaterial vorhanden sind, kann es vorteilhaft sein, das Ausgangsmaterial, insbesondere die Ionenaustauscherharze bzw. die sauren organischen Katalysatoren, vor und/oder während der Schwelung mit einem Sulfonierungsmittel, vorzugsweise SO₃, bevorzugt in Form von Schwefelsäure und/oder Oleum, insbesondere in einer Menge von etwa 1 bis etwa 30 Gew.-% SO₃, insbesondere 5 Gew.-% bis etwa 25 Gew.-% SO₃, bezogen auf das Trockengewicht des Ausgangsmaterials, in Kontakt zu bringen; dies erhöht die Anzahl der bei der Schwelung gebildeten freien Radikale noch zusätzlich und führt zu vermehrten Vernetzungen in den Polymeren, so daß schließlich stabilere bzw. kompaktere, insbesondere abriebfestere Endprodukte in Form von Kohlekörnern bzw. Kohlekügelchen resultieren und insbesondere auch die Ausbeute an Aktivkohle erhöht wird. Neben einer Steigerung der Ausbeute an Endprodukt bzw. Aktivkohle können hierdurch auch die Zeiten für die Schwelung deutlich verkürzt werden. Denn, wie die Anmelderin herausgefunden hat, lassen sich die Ausbeuten an Aktivkohle mit steigendem Säuregehalt bzw. Sulfonsäuregruppengehalt des Ausgangsmaterials erhöhen. Beispielsweise können auf diese Weise Ausgangsmaterialien, insbesondere Ionenaustauscher bzw. Katalysatoren, mit niedrigerem Säuregehalt zur Verbesserung der Ausbeute mit etwas Oleum und/oder Schwefelsäure versetzt werden. Normalerweise genügen beispielsweise etwa 1 bis etwa 30 Gew.-% gebundenes oder freies SO₃, bezogen auf Polymeranteil im Ausgangsmaterial. Die Einführung zusätzlicher Sulfonsäuregruppen mittels Sulfonierung kann entweder als separater Verfahrensschritt außerhalb der Schwelvorrichtung durchgeführt werden (und zwar entweder kontinuierlich oder diskontinuierlich) oder aber vorteilhafterweise in der Schwelvorrichtung selbst, wie nachfolgend noch im Detail beschrieben. Dies bietet den entscheidenden Vorteil, daß nicht nur den gesamten Schwelprozeß innerhalb einer Vorrichtung kontinuierlich durchgeführt werden kann, sondern auch noch die zusätzliche Sulfonierung als ein der Schwelung vorgeschalteter Verfahrensschritt in derselben Vorrichtung ablaufen können.

Gemäß einer weiteren, alternativen Ausführungsform des erfindungsgemäßen Verfahrens werden die chemischen Gruppen, welche bei ihrer thermischen Zersetzung zu freien Radikalen und somit zu Vernetzungen führen, insbesondere stark saure Gruppen wie Sulfonsäuregruppen, erst vor und/oder während der Schwelung in das Ausgangsmaterial eingeführt. Dies kann beispielsweise durch Sulfonierung des polymeren Ausgangsmaterials, vorzugsweise durch Zugabe eines Sulfonierungsmittels, insbesondere SO₃, bevorzugterweise in Form von Oleum und/oder Schwefelsäure, besonders bevorzugt in Form von mit Schwefelsäure vermischtem Oleum, erfolgen. Hierbei wird das unsulfonierte Ausgangsmaterial mit dem vorgenannten Sulfonierungsmittel in Kontakt gebracht, z. B. durch Mischen der Polymerkörner bzw. -kügelchen mit dem Sulfonierungsmittel, insbesondere Oleum und/oder Schwefelsäure, wobei darauf geachtet werden sollte, daß das polymere Ausgangsmaterial möglichst homogen und vollständig mit dem Sulfonierungsmittel in Kontakt gebracht bzw. gemischt werden, ohne daß "Trockenstellen/-zonen" (d. h. unbenetzte Stellen/Zonen) auf dem Ausgangsmaterial zurückbleiben. Dies kann dadurch gewährleistet werden, daß ein Überschuß an Sulfonierungsmittel eingesetzt wird, so daß eine "Naßmischung" in der Art eines homogenen Breis resultiert, welche dann unter erhöhten Temperaturen schließlich zur Sulfonierung des Ausgangsmaterials führt. Besonders bevorzugt ist es aber, wenn das nichtsulfonierte polymere Ausgangsmaterial (insbesondere ein Ausgangsmaterial in Form von Polymerkörnern bzw. -kügelchen, vorzugsweise auf Basis von divinylbenzolvernetztem Polystyrol) vor der Einbringung in die Schwelvorrichtung mit dem Sulfonierungsmittel derart in Kontakt gebracht worden ist, daß eine zumindest im wesentlichen vollständige Benetzung des polymeren Ausgangsmaterials bzw. der Polymerkörner bzw. -kügelchen mit dem Sulfonierungsmittel gewährleistet ist; dies geschieht vorteilhafterweise dadurch, daß das nichtsulfonierte polymere Ausgangsmaterial mit dem Sulfonierungsmittel in einer geeigneten Mischeinrichtung unter intensivem Mischen bzw. Durchmischen in Kontakt gebracht wird, vorzugsweise derart, daß eine zumindest im wesentlichen vollständige Benetzung des polymeren Ausgangsmaterials erfolgt, bevorzugt in einem Doppelschneckenextruder, dem das zu sulfonierende polymere Ausgangsmaterial und das Sulfonierungsmittel in geeigneter Weise (z. B. über getrennte Zufuhrkanäle) zugeführt werden können; diese besondere Ausführungsform hat den Vorteil, daß eine homogene, gleichmäßige und im wesentlichen vollständige Benetzung des polymeren Ausgangsmaterials mit dem Sulfonierungsmittel erreicht wird und zum anderen - aufgrund der intensiven Durchmischung - günstige Mengenverhältnisse, insbesondere relativ geringe Mengen an Sulfonierungsmittel, eingesetzt werden können, d. h. nicht mit einem (großen) Überschuß an Sulfonierungsmittel verfahren werden muß; des weiteren ermöglicht die vorgenannte besondere Ausführungsform, welche eine Mischeinrichtung einsetzt, die eine intensive Durchmischung des Sulfonierungsmittels mit dem zu sulfonierenden polymeren Ausgangsmaterials ermöglicht bzw. gewährleistet, relativ kurze Verweilzeiten, was in bezug auf den Verfahrensablauf günstig ist, da hohe Durchsätze erreicht werden können. Vorzugsweise erfolgt das Inkontaktbringen des nichtsulfonierten polymeren Ausgangsmaterials mit dem Sulfonierungsmittel in einem Temperaturbereich zwischen Raumtemperatur (ca. 20 °C) und Temperaturen unterhalb des Schmelzpunkts bzw. Schmelzbereichs des polymeren Ausgangsmaterials, vorzugsweise im Bereich von etwa 20 °C bis etwa 100 bis 150 °C, vorzugsweise bei Raumtemperatur. Als Sulfonierungsmittel eignen sich insbesondere Schwefelsäure, Oleum und Schwefelsäure/Oleum-Gemische; als Schwefelsäure wird bevorzugt konzentrierte Schwefelsäure, vorzugsweise 90%ige bis 100%ige Schwefelsäure eingesetzt, besonders bevorzugt in Mischung mit Oleum (Oleum ist eine besondere Form der konzentrierten Schwefelsäure, die wechselnde Mengen an Schwefeltrioxid SO₃ enthält, z. B. enthält 20%iges Oleum 20 % Schwefeltrioxid.). Im allgemeinen wird das Sulfonierungsmittel (insbesondere konzentrierte Schwefelsäure und/oder Oleum) in bezug auf das zu sulfonierende polymere Ausgangsmaterial in gewichtsbezogenen Mengenverhältnissen Sulfonierungsmittel/polymeres Ausgangsmaterial im Bereich von 0,2 : 1 bis 2 : 1, insbesondere 0,4 : 1 bis 1,5 : 1, eingesetzt. In der Praxis bewährt für die Sulfonierung des unsulfonierten Ausgangsmaterials haben sich insbesondere Oleum, wobei z. B. das Gewichtsverhältnis Polymer/Oleum 20 % bis zu etwa 1 : 1 oder mehr betragen kann, oder aber Oleum/Schwefelsäure-Gemische, wobei z. B. das Gewichtsverhältnis Polymer/Oleum 20 %/ Schwefelsäure etwa 1 : 1 : 0,5 betragen kann.

Die Sulfonierung selbst kann als dabei als separater Verfahrensschritt außerhalb der Schwelvorrichtung durchgeführt werden (und zwar entweder kontinuierlich oder diskontinuierlich) oder aber vorteilhafterweise in der Schwelvorrichtung selbst, wie nachfolgend noch im Detail beschrieben. Die letztgenannte Möglichkeit bietet den entscheidenden Vorteil, nicht nur den gesamten Schwelprozeß innerhalb einer Vorrichtung und kontinuierlich durchzuführen, sondern - im Fall von unsulfonierten Ausgangsprodukten oder Ausgangsprodukten mit geringen Sulfonsäuregruppengehalten - auch noch die Sulfonierung als einen der Schwelung vorgeschalteten Verfahrensschritt in derselben Vorrichtung vorzusehen.

Diese zweite Ausführungsform, bei der Ausgangsmaterialien zum Einsatz kommen, bei denen die bei ihrer thermischen Zersetzung zu freien Radikalen und somit zu Vernetzungen führenden chemischen Gruppen (wie z. B. stark saure Gruppen wie Sulfonsäuregruppen), noch vor und/oder während der Schwelung in das Ausgangsmaterial eingerührt werden müssen, bietet gegenüber der ersten Ausführungsform den Vorteil, daß kostengünstigere Materialien zum Einsatz kommen.

Beispiele für erfindungsgemäß geeignete Ausgangsmaterialien gemäß der zweiten Ausführungsform, bei denen die bei ihrer thermischen Zersetzung zu freien Radikalen und somit zu Vernetzungen führenden chemischen Gruppen (wie z. B. stark saure Gruppen wie Sulfonsäuregruppen), erst vor und/oder während der Schwelung in das Ausgangsmaterial eingeführt werden, sind beispielsweise Polymerkörnchen, insbesondere Polymerkügelchen, auf Basis von Styrol und Divinylbenzol, so z. B. Vorstufen von Ionenaustauscherharzen, wie sie zuvor beschrieben worden sind. Die Vorstufen für Ionenaustauscher können prinzipiell gelförmig oder makroporös sein. Letztere sind wesentlich teurer, hauptsächlich wegen ihres beträchtlich höheren Divinylbenzolgehalts. Ihre zahlreichen Mesoporen bleiben während der Umsetzung in Aktivkohle voll erhalten, was für manche Anwendungen sinnvoll ist. Die Geltypen führen hingegen zu ausgesprochen mikroporösen Kohlen: Das Porenvolumen kann bis zu 90 bis 95 % als Mikroporen vorliegen. Die Geltypen enthalten oft etwa 2 bis etwa 8 % Divinylbenzol. Aber auch nur schwach vernetzte Typen mit geringerem Gehalt an Divinylbenzol (circa 2 bis 4 % Divinylbenzol) überstehen die starke Quellung in der Säure, platzen also nicht bzw. zerbrechen nicht zu Halbkugeln. Es hat sich gezeigt, daß auch Typen mit sehr niedrigem Divinylbenzolgehalt erfindungsgemäß gut geeignet sind. Viel wichtiger ist die Sulfonierung, die so vollständig wie möglich sein muß, denn bei der Zersetzung der Sulfonsäuregruppen entstehen jene freien Radikale, die zu den für die Ausbeute verantwortlichen Vernetzungen führen. Während ausgehend von Kationenaustauschern sowohl makroporöse als auch Geltypen eingesetzt werden können und die Wahl eher eine Frage der Wirtschaftlichkeit ist, werden allerdings Geltypen bevorzugt, wenn Vorstufen von Ionenaustauschern (= reine Polymere) eingesetzt werden. Der Grund ist folgender: Die makroporösen Vorstufen nehmen in ihren großen Poren - ähnlich einem Löschblatt - sehr viel Säure bzw. Oleum auf, so daß die Mischung aus Polymer und Säure trokken bzw. sandig ist und eine gleichmäßige Verteilung der Säure kaum erreicht wird. Abgesehen davon, führt jedoch das Schwelen und Aktivieren von Kationenaustauschern zu vergleichbaren Produkten, als wenn von Vorstufen und Säure ausgegangen wird.

Für die Durchführung des erfindungsgemäßen Verfahrens sind gemäß einer bevorzugten Ausführungsform der vorliegenden Erfindung in der Schwelvorrichtung mindestens die folgenden Temperaturzonen in der nachfolgend wiedergegebenen Reihenfolge vorgesehen:
a) gegebenenfalls mindestens eine erste Temperaturzone ("Sulfonierungszone"), in der für den Fall, daß das Ausgangsmaterial keine bei ihrer thermischen Zersetzung zu freien Radikalen und somit zu Vernetzungen führenden Gruppen, insbesondere keine stark saure Gruppen wie Sulfonsäuregruppen, enthält oder aber solche Gruppen noch zusätzlich in das Ausgangsmaterial eingeführt werden sollen, diese Gruppen in das Ausgangsmaterial eingeführt werden, insbesondere durch Sulfonierung;
b) mindestens eine auf die erste Temperaturzone folgende zweite Temperaturzone (auch "Vorschwelzone" oder "Zone saurer Gase" genannt), vorzugsweise mit einer höheren mittleren Temperatur als die der ersten Temperaturzone, wobei in der zweiten Temperaturzone die bei ihrer thermischen Zersetzung zu freien Radikalen und somit zu Vernetzungen führenden Gruppen, insbesondere stark saure Gruppen wie Sulfonsäuregruppen, vom Ausgangsmaterial abgespalten werden, so daß es zu einem Einsetzen der Schwelung und/oder einer thermischen Zersetzung des Ausgangsmaterials, vorzugsweise unter Vernetzung der Polymeren und/oder Bildung von Kohlenstoff, kommt;
c) mindestens eine auf die zweite Temperaturzone folgende dritte Temperaturzone ("Nachschwelzone"), vorzugsweise mit einer höheren mittleren Temperatur als die der zweiten Temperaturzone, wobei in der dritten Temperaturzone eine weitergehende Schwelung des aus der zweiten Temperaturzone stammenden Ausgangsmaterials durchgeführt wird, so daß eine zumindest im wesentlichen vollständige Umsetzung des Ausgangsmaterials zu Kohlenstoff bewirkt wird.

Das erfindungsgemäße Verfahren bietet also den entscheidenden Vorteil, daß der gesamte Schwel- bzw. Carbonisierungsvorgang, d. h. Vorschwelung wie Nachschwelung, und gegebenenfalls zusätzlich auch die Sulfonierung, kontinuierlich in einer einzigen Vorrichtung bzw. Apparatur betrieben werden können.

Wie zuvor beschrieben, kann in einer ersten Temperaturzone a) für den Fall, daß das Ausgangsmaterial keine bei ihrer thermischen Zersetzung zu freien Radikalen und somit zu Vernetzungen führenden Gruppen, insbesondere keine stark saure Gruppen wie Sulfonsäuregruppen, enthält oder aber solche Gruppen noch zusätzlich in das Ausgangsmaterial eingeführt werden sollen, die Einführung dieser Gruppen in das Ausgangsmaterial, insbesondere durch Sulfonierung, erfolgen. Deshalb wird diese Zone auch "Sulfonierungszone" genannt. Die Sulfonierung erfolgt in an sich bekannter Weise, wie dies zuvor beschrieben worden ist. Im allgemeinen wird zu diesem Zweck die erste Temperaturzone bei Temperaturen von 50 bis 200 °C, insbesondere 75 bis 175 °C, vorzugsweise 100 bis 150 °C, betrieben. Diese Temperaturzone ist jedoch fakultativ und kann entfallen, wenn z. B. Ausgangsmaterial mit einem ausreichendem Gehalt an bei ihrer thermischen Zersetzung zu freien Radikalen und somit zu Vernetzungen führenden Gruppen, insbesondere sulfoniertes Ausgangsmaterial (z. B. stark saure Kationenaustauscher mit Sulfonsäuregruppen), eingesetzt wird oder aber die Sulfonierung getrennt in einem vorgelagertem Schritt durchgeführt wird. Vorteilhafterweise wird für den Fall, daß von einem unsulfonierten polymeren Ausgangsmaterial ausgegangen wird, dieses vor Einbringen in die Sulfonierungszone mit dem Sulfonierungsmittel in Kontakt gebracht, vorzugsweise derart, daß eine zumindest im wesentlichen vollständige Benetzung des polymeren Ausgangsmaterials bzw. der Polymerkörner bzw. -kügelchen mit dem Sulfonierungsmittel gewährleistet ist; für weitere diesbezügliche Einzelheiten kann auf obige Ausführungen verwiesen werden.

In den beiden sich anschließenden Temperaturzonen b) und c) erfolgt dann die Schwelung des sulfonierten Ausgangsmaterials, und zwar in zwei Stufen, nämlich Vorschwelung b) (zweite Temperaturzone bzw. "Vorschwelzone") und Nachschwelung c) (dritte Temperaturzone bzw. "Nachschwelzone"). Da bei der Vorschwelung b) in der zweiten Temperaturzone durch die gezielte Zersetzung des Ausgangsmaterials saure Gase (hauptsächlich SO₂, daneben auch geringen Mengen SO₃, H₂SO₄ und gegebenenfalls auch anderer saurer Gase) freigesetzt werden, wird diese Zone auch als "Zone saurer Gase" bezeichnet. In der dritten Temperaturzone bzw. Nachschwelzone c) dagegen werden keine sauren Gase mehr freigesetzt, sondern überwiegend Kohlenstoffoxide, wie Kohlenmonoxid und Kohlendioxid, Kohlenwasserstoffe, Wasserstoff und Wasser.

Die Temperaturen, bei denen die zweite und die dritte Temperaturzone b) und c) betrieben werden können, können in weiten Bereichen variieren. Beispielsweise kann die zweite Temperaturzone b) bei Temperaturen von 100 bis 500 °C, insbesondere 150 bis 450 °C, gefahren werden. Die dritte Temperaturzone c) kann beispielsweise bei Temperaturen oberhalb von 400 ° C, insbesondere oberhalb von 450 °C bis 500 °C, gefahren werden, z. B. bei Temperaturen von 400 bis 1.200 °C, insbesondere 450 bis 1.000 °C, vorzugsweise 500 °C bis 900 °C, besonders bevorzugt 550 bis 850 °C.

Bei der Schwelung - synonym auch als "Carbonisierung" oder "Pyrolyse" bezeichnet und im Fall der vorliegenden Erfindung bestehend aus Vorschwelung b) (zweite Temperaturzone und Nachschwelung) (dritte Temperaturzone) - erfolgt die Umwandlung des kohlenstoffhaltigen Ausgangsmaterials zu Kohlenstoff, d. h. mit anderen Worten wird das Ausgangsmaterial verkohlt bzw. carbonisiert. Bei der Schwelung werden - unter Abspaltung flüchtiger Bestandteile wie insbesondere SO₂ - die funktionellen chemischen Gruppen, insbesondere Sulfonsäuregruppen, zerstört, und es bilden sich freie Radikale, die eine starke Vernetzung bewirken, ohne die es keinen Pyrolyserückstand (= Kohlenstoff) gäbe. Im allgemeinen wird die Pyrolyse bzw. Schwelung unter inerter Atmosphäre (z. B. Stickstoff) oder allenfalls leicht oxidierender Atmosphäre durchgeführt. Gleichermaßen kann es vorteilhaft sein, während der Schwelung, insbesondere bei höheren Temperaturen (z. B. im Bereich von etwa 500 °C bis 650 °C), zu der Inertatmosphäre eine kleinere Menge an Sauerstoff, insbesondere in Form von Luft (z. B. 1 bis 5 %), zuzugeben, um eine Oxidation des carbonisierten Polymerskeletts zu bewirken und auf diese Weise die Aktivierung zu erleichtern.

Vorteilhafterweise sind die einzelnen Temperaturzonen getrennt bzw. unabhängig voneinander steuerbar. Den einzelnen Temperaturzonen können jeweils Abzugseinrichtungen zugeordnet sein, wobei es vorteilhaft sein kann, den einzelnen Temperaturzonen getrennte bzw. unabhängige Abzugseinrichtungen zuzuordnen, so daß eine Trennung bzw. ein getrenntes Auffangen der aus den unterschiedlichen Temperaturzonen stammenden Prozeßgase erfolgen kann (z. B. getrenntes Auffangen der sauren Prozeßgase). Auf diese Weise kann beispielsweise die saure bzw. korrosive Phase (Vorschwelung, verbunden mit SO₂-Ausstoß) von der Hochtemperatur-Phase (Nachschwelung) getrennt werden. Die Anmelderin hat nämlich gefunden, daß vorgeschweltes Ausgangsmaterial bei weiterer Temperaturerhöhung keine sauren bzw. korrosiven Stoffe mehr freisetzt.

Gleichermaßen kann es vorteilhaft sein, in der Schwelvorrichtung mindestens eine Schleuse vorzusehen, insbesondere zwischen einzelnen, aufeinanderfolgenden Temperaturzonen und/oder innerhalb einzelner Temperaturzonen, vorzugsweise zumindest zwischen zweiter und dritter Temperaturzone, so daß zumindest im wesentlichen keine Durchmischung von aus unterschiedlichen Temperaturzonen, zwischen den mindestens eine Schleuse angeordnet ist, stammenden Prozeßgasen erfolgt; auf diese Weise kann verhindert werden, daß beispielsweise die aus der zweiten Temperaturzone stammenden sauren Prozeßgase (vor allem SO₂) nicht mit den übrigen Prozeßgasen durchmischt werden, sondern separat aufgefangen werden können, gegebenenfalls gefolgt von einer Entsorgung oder einer Wiederaufbereitung mit nachfolgender Rezyklierung. So kann beispielsweise das insbesondere während der Vorschwelung kontinuierlich ausgetriebene SO₂ regeneriert werden, insbesondere über eine katalytische Oxidation zu SO₃ und weiter zu Schwefelsäure und/oder Oleum umgesetzt werden. Das Vorhandensein einer oder mehrerer Schleusen ermöglicht gleichermaßen eine gezielte Gaszugabe zu einzelnen Temperaturzonen (z. B. Zugabe kleinerer Mengen an Sauerstoff) bzw. das Aufrechterhalten einer bestimmten Gaszusammensetzung in bestimmten Temperatur- bzw. Reaktionszonen oder Teilen von Temperatur- bzw. Reaktionszonen (z. B. inerte Atmosphäre in Teilen der Vorschwelzone und leicht oxidierende Atmosphäre in Teilen der Nachschwelzone).

Vorteilhaft und in bezug auf die Verfahrensführung empfehlenswert ist es, zwischen den einzelnen Temperaturzonen, aber auch innerhalb einer einzelnen Temperaturzone kontinuierliche Temperaturübergänge vorzusehen und große Temperaturdifferenzen ("Temperatursprünge") zu vermeiden. Auf diese Weise lassen sich qualitativ besonders gute Produkte erhalten, da insbesondere ein Bersten oder Zerspringen der Ausgangsmaterialien, wie es bei großen Temperatursprüngen vorkommen kann, vermieden wird. Daher ist es gleichermaßen vorteilhaft und in bezug auf die Verfahrensführung empfehlenswert, auch innerhalb einer einzelnen Temperatur- bzw. Reaktionszone einen Temperaturgradienten vorzusehen, vorzugsweise derart, daß der Übergang zur nächsten Temperatur- bzw. Reaktionszone zumindest im wesentlichen kontinuierlich, d. h. nicht sprunghaft ist.

Die Verfahrenssteuerung läßt sich durch Einstellung des Temperaturprofils in den einzelnen Temperaturzonen und/oder des Temperaturprofils des Temperaturgradienten und/oder durch Einstellung der Geschwindigkeit, mit der das Ausgangsmaterial durch die Temperaturzonen und/oder den Temperaturgradienten der Schwelvorrichtung bewegt wird, gezielt steuern.

Die Gesamtverweildauer des Ausgangsmaterials in der Schwelvorrichtung ist nicht kritisch und kann in weiten Grenzen variieren. Im allgemeinen liegt sie im Bereich von 0, 1 bis 5 Stunden, insbesondere 0,25 bis 4 Stunden, vorzugsweise 0,5 bis 3 Stunden.

Der Schwelung schließt sich im allgemeinen eine Aktivierung des geschwelten Materials an. Diese erfolgt im allgemeinen unter an sich bekannten Bedingungen. Das Grundprinzip der Aktivierung besteht darin, einen Teil des bei der Schwelung generierten Kohlenstoffs selektiv und gezielt unter geeigneten Bedingungen abzubauen. Hierdurch entstehen zahlreiche Poren, Spalten und Risse, und die auf die Masseneinheit bezogene Oberfläche nimmt erheblich zu. Bei der Aktivierung wird also ein gezielter Abbrand der Kohle vorgenommen. Da bei der Aktivierung Kohlenstoff abgebaut wird, tritt bei diesem Vorgang ein zum Teil erheblicher Substanzverlust ein, welcher unter optimalen Bedingungen gleichbedeutend mit einer Erhöhung der Porosität ist und Zunahme der inneren Oberfläche (Porenvolumen) ist. Die Aktivierung erfolgt daher unter selektiven bzw. kontrollierten, oxidierenden Bedingungen. Übliche Aktivierungsgase sind im allgemeinen Sauerstoff, insbesondere in Form von Luft, Wasserdampf und/oder Kohlendioxid sowie Gemische dieser Aktivierungsgase. Da bei Sauerstoff die Gefahr besteht, daß die Einwirkung nicht nur selektiv, sondern an der Gesamtoberfläche erfolgt - wodurch die Kohle mehr oder weniger stark abbrennt -, gibt man Wasserdampf und Kohlendioxid den Vorzug. Ganz besonders bevorzugt ist Wasserdampf, gegebenenfalls in Mischung mit einem Inertgas (z. B. Stickstoff). Um eine technisch ausreichend hohe Reaktionsgeschwindigkeit zu erzielen, wird die Aktivierung im allgemeinen bei Temperaturen von etwa 700 °C bis etwa 1.200 °C, insbesondere etwa 800 °C bis etwa 1.110 °C, vorzugsweise etwa 850 °C bis etwa 1.000 °C, besonders bevorzugt etwa 900 °C bis etwa 975 °C durchgeführt. Die Dauer der Aktivierung kann dabei in weiten Bereichen variieren und beispielsweise etwa 0,5 bis etwa 6 Stunden, insbesondere etwa 1,5 bis etwa 5 Stunden, vorzugsweise etwa 2 bis etwa 3,5 Stunden, betragen.

Erfindungsgemäß kann die Aktivierung insbesondere mit einem Gemisch aus Wasserdampf und Stickstoff, insbesondere bei Temperaturen von etwa 850 °C bis etwa 960 °C, vorzugsweise etwa 910 °C bis etwa 930 °C, durchgeführt werden. Die Verweilzeiten können dabei etwa 0,5 bis etwa 20 Stunden, insbesondere etwa 2 Stunden bis etwa 15 Stunden, vorzugsweise etwa 5 Stunden bis etwa 10 Stunden, betragen.

Die Aktivierung kann prinzipiell gleichermaßen in der Schwelvorrichtung durchgeführt werden. Im allgemeinen wird aber daß die Aktivierung in einer separaten Vorrichtung, insbesondere räumlich und zeitlich getrennt von der Schwelung, durchgeführt.

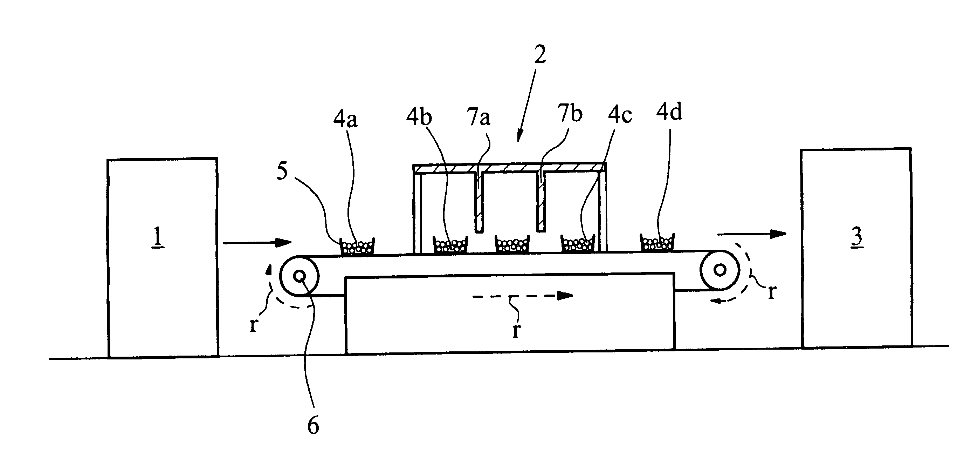

Die einzige Figur zeigt schematisch einen typischen Ablauf des erfindungsgemäßen Verfahrens nach einer besonderen Ausführungsform. In 1 wird das verschwelbare bzw. carbonisierbare Ausgangsmaterial 4a bereitgestellt, beispielsweise Polymerkügelchen auf Basis von divinylbenzolvernetztem Polystyrol, also unsulfoniertes Ausgangsmaterial. Das unsulfonierte Ausgangsmaterial 4a wird dann mit einem geeigneten Sulfonierungsmittel, insbesondere Schwefeltrioxid, vorzugsweise in Form eines Oleum/Schwefelsäure-Gemisches, in Kontakt gebracht und anschließend portionsweise in dafür vorgesehene Reaktionsgefäße 5 eingebracht, die über eine geeignete Transport- oder Fördereinrichtung 6, insbesondere ein bewegtes Transport- oder Förderband, durch die Schwelvorrichtung 2, insbesondere einen Bandofen, kontinuierlich in die Richtung r bewegt werden. Die Schwelvorrichtung umfaßt im Fall des in der Figur dargestellten Ausführungsbeispiels drei Temperaturzonen, die jeweils durch Schleusen 7a, 7b voneinander getrennt sind, so daß zumindest im wesentlichen keine Durchmischung von aus unterschiedlichen Temperaturzonen, zwischen denen eine Schleuse 7a, 7b angeordnet ist, stammenden Prozeßgasen erfolgt, insbesondere die aus der zweiten Temperaturzone stammenden sauren Prozeßgase nicht mit den übrigen Prozeßgasen durchmischt werden und separat aufgefangen werden können. Das mit dem Sulfonierungsmittel in Kontakt gebrachte Ausgangsmaterial 4b wird in der ersten Temperaturzone der Schwelvorrichtung 2 zunächst sulfoniert und anschließend in eine zweite Temperaturzone zur Vorschwelung eingebracht, im Rahmen derer die Sulfonsäuregruppen vom Ausgangsmaterial abgespalten werden, so daß es zu einem Einsetzen der Schwelung unter Vernetzung der gebildeten Radikale kommt. Schließlich wird das auf diese Weise vorgeschwelte Material 4c über die Transport- oder Fördereinrichtung 6 in eine dritte Temperaturzone transportiert, wo schließlich eine weitergehende Schwelung zu dem carbonisierten Produkt 4d erfolgt. Dieses kann anschließend noch einer Aktivierung 3 zugeführt werden, so daß carbonisierte und aktivierte Aktivkohle in Kugelform erhalten wird.

Weiterer Gegenstand der vorliegenden Erfindung sind auch die nach dem erfindungsgemäßen Verfahren hergestellten bzw. herstellbaren Produkte, d. h. Aktivkohle in Korn- bzw. Kugelform. Aufgrund der kontinuierlichen Verfahrensführung, bei der die Ausgangspolymere kontinuierlich, d. h. ohne Unterbrechung, insbesondere ohne Abkühlung der vorgeschwelten Zwischenprodukte, einer Schwelung unterzogen werden, erhält man Aktivkohle mit verbesserten Eigenschaften, insbesondere mit verbesserten mechanischen wie adsorptiven Eigenschaften. Denn die Anmelderin hat herausgefunden, daß eine diskontinuierliche Verfahrensführung bei der Schwelung mit Trennung zwischen Vorschwelung und Nachschwelung, wie sie im Stand der Technik üblich ist, insbesondere unter Isolierung der vorgeschwelten Produkte mit zwischenzeitlicher Abkühlung, abträglich in bezug auf die Endprodukte ist. Dies wird bei dem erfindungsgemäßen Verfahren aber gerade vermieden.

Wie zuvor erwähnt, hängt die Teilchengröße der erhaltenen Korn- bzw. Kugelkohle vom Ausgangsmaterial ab. Handelsübliche Ausgangsprodukte führen im allgemeinen zu Aktivkohlekörnern bzw. -kügelchen mit Durchmessern von bis zu etwa 2 mm, insbesondere von bis zu etwa 1,5 mm oder weniger, beispielsweise im Bereich von etwa 0,1 mm bis etwa 1,0 mm, insbesondere etwa 0,2 mm bis etwa 0,8 mm Durchmesser, mit Mittelwerten um etwa 0,4 mm bis etwa 0,5 mm. Während der Schwelung und Aktivierung bleibt die Kugelform der Ausgangsmaterialien erhalten. D. h. durch die Form der Ausgangsmaterialien läßt sich gezielt die Teilchengröße des Endproduktes steuern und bestimmen, was einen weiteren Vorteil des erfindungsgemäßen Verfahrens darstellt. Der Durchmesser der auf diese Weise hergestellten Aktivkohlekörner bzw. -kügelchen ist um circa 0,1 mm kleiner als jene der Ausgangspolymere, so daß bei entsprechender Auswahl des Ausgangsmaterials der Durchmesser der Kugelkohle gesteuert werden kann. Für die meisten Anwendungen sind Kugeldurchmesser von etwa 0,2 mm bis etwa 1,0 mm, insbesondere etwa 0,3 mm bis etwa 0,8 mm, mit Mittelwerten von etwa 0,4 mm bis etwa 0,6 mm, besonders geeignet.

Durch die Aktivierung lassen sich innere Oberflächen von etwa 800 m²/g bis etwa 1.500 m²/g erzielen, bevorzugt etwa 900 m²/g bis etwa 1.200 m²/g. Der Berstdruck für ein einzelnes Aktivkohlekörnchen bzw. -kügelchen beträgt im allgemeinen circa 5 Newton bis circa 20 Newton. Das Rüttelgewicht liegt bei etwa 400 g/l bis etwa 800 g/l, vorzugsweise bei etwa 500 g/l bis etwa 750 g/l.

Die erfindungsgemäß erhaltene Korn- bzw. Kugelkohle ist sehr abriebfest, rieselfähig, staubfrei und sehr druckfest. Gegenstand der vorliegenden Erfindung sind gleichermaßen Aktivkohlekörner bzw. -kügelchen hoher Festigkeit, insbesondere Abriebfestigkeit, die nach dem erfindungsgemäßen Verfahren hergestellt werden können.

Eine wichtige Rolle für die Aktivität der Kugelkohle spielen die Poren der Aktivkohle, insbesondere die Mikroporen mit einem Durchmesser bis zu etwa 20 Å, da diese in der Größenordnung der meisten zu adsorbierenden Moleküle liegt. Auf die Mikroporen ist im allgemeinen auch der Hauptanteil der inneren Oberfläche der Aktivkohle zurückzuführen. Daneben sind auch die sogenannten Mesoporen - bisweilen auch als Übergangs- oder Zuleitungsporen bezeichnet - mit Durchmessern von etwa 20 bis etwa 500 Å von Bedeutung. Weiterhin gibt es auch noch einen Anteil an noch größeren Makroporen. Durch die Auswahl der Rohstoffe und die Verfahrensführung bei der Aktivierung lassen sich die Eigenschaften der Endprodukte gezielt steuern. Gewünscht ist ein hoher Anteil an Mikroporen.

Dem Fachmann ist bekannt, daß Porenvolumen, Porendurchmesser und Porenverteilung je nach Aktivierungsgrad variieren und das Porensystem und die Porenstruktur, insbesondere der Porendurchmesser, sowie die Oberflächenstruktur des Endproduktes durch Temperatur und Aktivierung gezielt beeinflußt werden können, so daß diesbezüglich auf die einschlägige Fachliteratur verwiesen werden kann.

Die nach dem erfindungsgemäßen Verfahren hergestellten Aktivkohlekörner bzw. -kügelchen zeigen gute bis ausgezeichnete Adsorptionseigenschaften. Des weiteren besteht die Möglichkeit, die Adsorptionseigenschaften der erfindungsgemäß hergestellten Aktivkohlekörner bzw. -kügelchen durch Imprägnierung mit Katalysatoren (Enzyme, Metalle wie z. B. Kupfer, Silber, Platin, Chrom, Zink, Quecksilber, Palladium, Cadmium, Eisen etc. sowie Verbindungen dieser Metalle) zu beeinflussen bzw. zu modifizieren. Das gemäß dem erfindungsgemäßen Herstellungsprozeß erhaltene Aktivkohleprodukt kann also eine katalytisch wirksame Komponente, vorzugsweise eine Verbindung eines katalytisch aktiven Metalls, umfassen. Die Imprägnierung von Aktivkohle mit Katalysatoren ist dem Fachmann an sich geläufig, so daß diesbezüglich auf die einschlägige Fachliteratur verwiesen werden kann.

Die nach dem erfindungsgemäßen Verfahren hergestellten Aktivkohlekörner bzw. -kügelchen können für die unterschiedlichsten Anwendungen eingesetzt werden. Die nach dem erfindungsgemäßen Verfahren hergestellten Aktivkohlekörner bzw. -kügelchen können beispielsweise Verwendung finden zur Herstellung von Adsorptionsmaterialien wie Adsorptions(flächen)filtern, Filtermatten, Geruchsfiltern, Flächenfiltern für Schutzanzüge insbesondere für den zivilen und/oder militärischen Bereich, Filtern für die Raumluftreinigung, Gasmaskenfiltern und adsorptionsfähigen Trägerstrukturen oder aber für Schutzmaterialien, insbesondere Schutzanzüge gegen chemische Gifte wie Kampfstoffe, oder für Filter, insbesondere Filter zur Entfernung von Schad-, Gift- und/oder Geruchsstoffen aus Luft- bzw. Gasströmen.

Gegenstand der vorliegenden Erfindung sind somit auch die erfindungsgemäß hergestellten Aktivkohlekörner bzw. -kügelchen enthaltende Adsorptionsmaterialien, insbesondere Filter aller Art wie Adsorptions(flächen)filter, Filtermatten, Geruchsfilter, Flächenfilter für Schutzanzüge insbesondere für den zivilen und/oder militärischen Bereich wie Schutzanzüge gegen chemische Gifte wie Kampfstoffe, Filter für die Raumluftreinigung sowie hieraus hergestellte Schutzanzüge, Gasmaskenfilter, Filter zur Entfernung von Schad-, Gift- und/oder Geruchsstoffen aus Luft- bzw. Gasströmen und adsorptionsfähige Trägerstrukturen.

## Patentansprüche

1. Verfahren zur Herstellung kornförmiger, insbesondere kugelförmiger Aktivkohle durch Schwelung von geeigneten kohlenstoffhaltigen Polymeren in Form von Polymerkörnern, insbesondere Polymerkügelchen, welche durch Schwelung zumindest im wesentlichen zu Kohlenstoff umgesetzt werden können, als Ausgangsmaterial, wobei die Polymerkörner, insbesondere Polymerkügelchen, kontinuierlich durch eine mehrere Temperaturzonen umfassende Schwelvorrichtung bewegt werden, so daß eine zumindest im wesentlichen vollständige Umsetzung des Ausgangsmaterials zu Kohlenstoff bewirkt wird,
wobei die Schwelvorrichtung mindestens die folgenden Temperaturzonen in der nachfolgend wiedergegebenen Reihenfolge umfaßt:
a) gegebenenfalls eine erste Temperaturzone ("Sulfonierungszone"), in der für den Fall, daß das Ausgangsmaterial keine bei ihrer thermischen Zersetzung zu freien Radikalen und somit zu Vernetzungen führenden Gruppen, insbesondere keine stark sauren Gruppen wie Sulfonsäuregruppen, enthält oder aber solche Gruppen noch zusätzlich in das Ausgangsmaterial eingeführt werden sollen, diese Gruppen in das Ausgangsmaterial eingeführt werden, insbesondere durch Sulfonierung;
b) eine zweite Temperaturzone ("Vorschwelzone" oder "Zone saurer Gase"), vorzugsweise mit einer höheren mittleren Temperatur als die der ersten Temperaturzone, wobei in der zweiten Temperaturzone die bei ihrer thermischen Zersetzung zu freien Radikalen und somit zu Vernetzungen führenden Gruppen, insbesondere stark saure Gruppen wie Sulfonsäuregruppen, vom Ausgangsmaterial abgespalten werden, so daß es zu einem Einsetzen der Schwelung und/oder einer thermischen Zersetzung des Ausgangsmaterials, vorzugsweise unter Vernetzung der Polymeren und/oder Bildung von Kohlenstoff, kommt;
c) eine dritte Temperaturzone ("Nachschwelzone"), vorzugsweise mit einer höheren mittleren Temperatur als die der zweiten Temperaturzone, wobei in der dritten Temperaturzone eine weitergehende Schwelung des aus der zweiten Temperaturzone stammenden Ausgangsmaterials durchgeführt wird, so daß eine zumindest im wesentlichen vollständige Umsetzung des Ausgangsmaterials zu Kohlenstoff bewirkt wird,
wobei die einzelnen Temperaturzonen getrennt und/oder unabhängig voneinander gesteuert werden.

2. Verfahren nach Anspruch 1, **dadurch gekennzeichnet, daß** als Schwelvorrichtung ein kontinuierlich arbeitendes Drehrohr bzw. ein kontinuierlich arbeitender Drehrohrofen eingesetzt wird oder aber daß als Schwelvorrichtung ein Bandofen, insbesondere ein Oxidationsbandofen, eingesetzt wird.

3. Verfahren nach Anspruch 1 oder 2, **dadurch gekennzeichnet, daß** die Polymerkörner, insbesondere Polymerkügelchen, kontinuierlich mittels einer Transport- oder Fördereinrichtung, insbesondere eines bewegten Transport- oder Förderbandes oder eines Vortriebskörpers wie einer Förderschnecke, durch die Temperaturzonen der Schwelvorrichtung, insbesondere des Drehrohrs bzw. Drehrohrofens oder Bandofens, bewegt werden in der Art, daß eine zumindest im wesentlichen vollständige Umsetzung des Ausgangsmaterials zu Kohlenstoff bewirkt wird.

4. Verfahren nach einem der vorangehenden Ansprüche, **dadurch gekennzeichnet, daß** als Ausgangsmaterial Polymere in Form von Polymerkörnchen, insbesondere Polymerkügelchen, auf Basis von Styrol und Divinylbenzol eingesetzt werden, die chemische Gruppen, welche bei ihrer thermischen Zersetzung zu freien Radikalen und somit zu Vernetzungen führen, insbesondere stark saure Gruppen wie Sulfonsäuregruppen, enthalten.

5. Verfahren nach Anspruch 4, **dadurch gekennzeichnet, daß** die zu Vernetzungen führenden chemischen Gruppen, insbesondere stark sauren Gruppen wie Sulfonsäuregruppen, bereits im Ausgangsmaterial vorhanden sind und/oder daß das Gewichtsverhältnis Polymere/Sulfonsäuregruppen etwa 5 : 1 bis etwa 1 : 1, insbesondere etwa 2 : 1 bis etwa 1 : 1, beträgt.

6. Verfahren nach einem der Ansprüche 4 oder 5, **dadurch gekennzeichnet, daß** als Ausgangsmaterial Ionenaustauscherharze, insbesondere vorzugsweise stark saure Kationenaustauscherharze, insbesondere Ionenaustauscherharze mit Sulfonsäuregruppen, und/oder saure organische Katalysatoren, wie Katalysatoren für die Bisphenolsynthese oder für die MTBE-Synthese, eingesetzt werden.

7. Verfahren nach Anspruch 6, **dadurch gekennzeichnet, daß** dem Ausgangsmaterial, insbesondere den Ionenaustauscherharzen und/oder den sauren organischen Katalysatoren, vor und/oder während der Schwelung ein Sulfonierungsmittel, vorzugsweise SO₃, bevorzugt in Form von Schwefelsäure und/oder Oleum, insbesondere in einer Menge von etwa 1 bis etwa 30 Gew.-% SO₃, insbesondere 5 Gew.-% bis etwa 25 Gew.-% SO₃, bezogen auf das Trockengewicht des Ausgangsmaterials, zugegeben wird.

8. Verfahren nach Anspruch 4, **dadurch gekennzeichnet, daß** die chemischen Gruppen, welche bei ihrer thermischen Zersetzung zu freien Radikalen und somit zu Vernetzungen führen, insbesondere stark saure Gruppen wie Sulfonsäuregruppen, erst vor und/oder während der Schwelung in das Ausgangsmaterial eingeführt werden, insbesondere durch Sulfonierung, vorzugsweise durch Zugabe eines Sulfonierungsmittels, insbesondere SO₃, bevorzugterweise in Form von Oleum und/oder Schwefelsäure, besonders bevorzugt in Form von mit Schwefelsäure vermischtem Oleum, insbesondere wobei das nichtsulfonierte polymere Ausgangsmaterial vor seiner Einbringung in die Schwelvorrichtung mit dem Sulfonierungsmittel in Kontakt gebracht wird, vorzugsweise derart, daß eine zumindest im wesentlichen vollständige Benetzung des polymeren Ausgangsmaterials Sulfonierungsmittel erfolgt.

9. Verfahren nach Anspruch 8, **dadurch gekennzeichnet, daß** das Sulfonierungsmittel, insbesondere konzentrierte Schwefelsäure und/oder Oleum, in bezug auf das zu sulfonierende polymere Ausgangsmaterial in gewichtsbezogenen Mengenverhältnissen Sulfonierungsmittel/polymeres Ausgangsmaterial im Bereich von 0;2 : 1 bis 2 : 1, insbesondere 0,4 : 1 bis 1,5 : 1, eingesetzt wird und/oder daß das Gewichtsverhältnis Polymer/Oleum 20 % bis zu etwa 1 : 1 oder mehr beträgt und/oder daß das Gewichtsverhältnis Polymer/Oleum 20 %/Schwefelsäure etwa 1 : 1 : 0,5 beträgt.

10. Verfahren nach Anspruch 8 oder 9, **dadurch gekennzeichnet, daß** als Ausgangsmaterial Polymerkörnchen, insbesondere Polymerkügelchen, auf Basis von Styrol und Divinylbenzol, eingesetzt werden und/oder daß als Ausgangsmaterial Vorstufen von Ionenaustauscherharzen eingesetzt werden.

11. Verfahren nach einem oder mehreren der vorhergehenden Ansprüche, **dadurch gekennzeichnet, daß** die Polymerkörnchen, insbesondere Polymerkügelchen porös, insbesondere makroporös, und/oder gelförmig sind.

12. Verfahren nach einem der vorangehenden Ansprüche, **dadurch gekennzeichnet, daß** den einzelnen Temperaturzonen getrennte und/oder unabhängige Abzugseinrichtungen zugeordnet sind, so daß eine Trennung und/oder ein getrenntes Auffangen der aus den unterschiedlichen Temperaturzonen stammenden Prozeßgase erfolgt und/ oder daß in der Schwelvorrichtung mindestens eine Schleuse, insbesondere zwischen einzelnen, aufeinanderfolgenden Temperaturzonen und/oder innerhalb einzelner Temperaturzonen, vorzugsweise zumindest zwischen zweiter und dritter Temperaturzone, vorgesehen ist, so daß zumindest im wesentlichen keine Durchmischung von aus unterschiedlichen Temperaturzonen, zwischen den mindestens eine Schleuse angeordnet ist, stammenden Prozeßgasen erfolgt und/oder so daß die aus der zweiten Temperaturzone stammenden sauren Prozeßgase nicht mit den übrigen Prozeßgasen durchmischt werden und separat aufgefangen werden können, gegebenenfalls gefolgt von einer Entsorgung oder einer Wiederaufbereitung mit nachfolgender Rezyklierung.

13. Verfahren nach einem der vorangehenden Ansprüche, **dadurch gekennzeichnet, daß** die Verfahrenssteuerung durch Einstellung des Temperaturprofils in den einzelnen Temperaturzonen und/oder durch Einstellung der Geschwindigkeit, mit der das Ausgangsmaterial durch die Temperaturzonen der Schwelvorrichtung bewegt wird, gesteuert wird und/oder daß die gesamte Verweildauer des Ausgangsmaterials in der Schwelvorrichtung 0,1 bis 5 Stunden, insbesondere 0,25 bis 4 Stunden, vorzugsweise 0,5 bis 3 Stunden, beträgt.

14. Verfahren nach einem der vorangehenden Ansprüche, **dadurch gekennzeichnet, daß** die erste Temperaturzone bei Temperaturen von 50 bis 200 °C, insbesondere 75 bis 175 °C, vorzugsweise 100 bis 150 °C, gefahren wird und/oder daß die zweite Temperaturzone bei Temperaturen von 100 bis 500 °C, insbesondere 150 bis 450 °C, gefahren wird und/oder daß die dritte Temperaturzone bei Temperaturen oberhalb von 400 ° C, insbesondere oberhalb von 450 °C bis 500 °C, gefahren wird und/oder daß die dritte Temperaturzone bei Temperaturen von 400 bis 1.200 °C, insbesondere 450 bis 1.000 °C, vorzugsweise 500 °C bis 900 °C, besonders bevorzugt 550 bis 850 °C, gefahren wird.

15. Verfahren nach einem oder mehreren der vorhergehenden Ansprüche, **dadurch gekennzeichnet, daß** das geschwelte Material anschließend einer Aktivierung unterzogen wird.

16. Verfahren nach Anspruch 15, **dadurch gekennzeichnet, daß** die Aktivierung gleichermaßen in der Schwelvorrichtung durchgeführt wird oder aber daß die Aktivierung in einer separaten Vorrichtung und/oder räumlich und/oder zeitlich getrennt von der Schwelung durchgeführt wird.

17. Verfahren nach Anspruch 15 oder 16, **dadurch gekennzeichnet, daß** die Aktivierung in an sich üblicher Weise durchgeführt wird, insbesondere wobei die Aktivierung in Gegenwart an sich für diese Zwecke üblicher Aktivierungsgase, wie Sauerstoff, insbesondere in Form von Luft, Wasserdampf und/oder Kohlendioxid oder Gemischen dieser Aktivierungsgase, vorzugsweise im Gegenwart eines Gemisches aus Wasserdampf und Stickstoff, durchgeführt wird und/oder insbesondere wobei die Aktivierung bei Temperaturen von etwa 700 bis 1.200 °C, insbesondere etwa 800 °C bis etwa 1.100 °C, vorzugsweise etwa 850 °C bis etwa 1.000 °C, besonders bevorzugt etwa 900 bis etwa 975 °C, durchgeführt wird und/ oder insbesondere wobei die Dauer der Aktivierung etwa 0,5 bis etwa 20 Stunden, insbesondere etwa 2 Stunden bis etwa 15 Stunden, vorzugsweise etwa 5 Stunden bis etwa 10 Stunden, beträgt.

## Claims

1. Process for producing granular, in particular spherical, activated carbon by smoldering of suitable carbonaceous polymers in the form of polymer granules, in particular polymer spherules, which are convertible by smoldering into carbon at least essentially, as a starting material, wherein the polymer granules, in particular polymer spherules, are continuously moved through a smoldering apparatus comprising a plurality of temperature zones so that an at least essentially complete conversion of the starting material to carbon is effected, wherein the smoldering apparatus comprises at least the following temperature zones in the following order:
a) if appropriate a first temperature zone ("sulfonating zone") in which in the event that the starting material contains no groups which, when thermally decomposed, lead to free radicals and thus to crosslinks, in particular no strongly acidic groups such as sulfonic acid groups, or else such groups are to be additionally introduced into the starting material, these groups are introduced into the starting material, in particular by sulfonation;
b) a second temperature zone ("presmoldering zone" or "zone of acidic gases"), preferably having a higher average temperature than the first temperature zone, the second temperature zone being the location where the groups which, when thermally decomposed, lead to free radicals and thus to crosslinks, in particular strongly acidic groups such as sulfonic acid groups, are detached from the starting material, so that smoldering and/or thermal decomposition of the starting material ensues, preferably accompanied by crosslinking of the polymers and/or formation of carbon;
c) a third temperature zone ("postsmoldering zone"), preferably having a higher average temperature than the second temperature zone, the third temperature zone being the location of further smoldering of the starting material from the second temperature zone, so that an at least essentially complete conversion of the starting material to carbon is effected, wherein the individual temperature zones are controlled separately and/or independently.

2. Process according to claim 1, **characterized in that** the smoldering apparatus used is a continuous rotary tube or a continuous rotary tube oven, or else **in that** the smoldering apparatus used is a belt oven, in particular an oxidizing belt oven.

3. Process according to claim 1 or 2, **characterized in that** the polymer granules, in particular polymer spherules, are continuously moved through the temperature zones of the smoldering apparatus, in particular of the rotary tube or rotary tube oven or belt oven, by means of transporting or conveying means, in particular by means of a moving transporting or conveying belt or a propulsive body, such as a screw conveyor, such that an at least essentially complete conversion of the starting material to carbon is effected.

4. Process according to any one of the preceding claims, **characterized in that** the starting material used comprises polymers in the form of polymer granules, in particular polymer spherules, based on styrene and divinylbenzene and containing chemical groups which, when thermally decomposed, lead to free radicals and thus to crosslinks, in particular strongly acidic groups such as sulfonic acid groups.

5. Process according to claim 4, **characterized in that** the chemical groups leading to crosslinks, in particular strongly acidic groups such as sulfonic acid groups, are already present in the starting material and/or **in that** the weight ratio of polymers to sulfonic acid groups is in the range from about 5:1 to about 1:1 and in particular in the range from about 2:1 1 to about 1:1.

6. Process according to claim 4 or claim 5, **characterized in that** the starting material used comprises ion exchanger resins, in particular preferably strongly acidic cation exchanger resins, in particular ion exchanger resins having sulfonic acid groups, and/or acidic organic catalysts, such as catalysts for bisphenol synthesis or for MTBE synthesis.

7. Process according to claim 6, **characterized in that** the starting material, in particular the ion exchanger resins and/or the acidic organic catalysts, has added to it before and/or during the smoldering a sulfonating agent, preferably SO₃, preferably in the form of sulfuric acid and/or oleum, in particular in an amount of about 1 % to about 30 % by weight of SO₃, in particular 5 % by weight to about 25 % by weight of SO₃, based on the dry weight of the starting material.

8. Process according to claim 4, **characterized in that** the chemical groups which, when thermally decomposed, lead to free radicals and thus to crosslinks, in particular strongly acidic groups such as sulfonic acid groups, are, before and/or during the smoldering, introduced into the starting material, in particular by sulfonation, preferably by addition of a sulfonating agent, in particular SO₃, preferably in the form of oleum and/or sulfuric acid, more preferably in the form of oleum mixed with sulfuric acid, in particular wherein the nonsulfonated polymeric starting material is before being introduced into the smoldering apparatus contacted with the sulfonating agent, preferably such that the polymeric starting material is at least essentially completely wetted with sulfonating agent.

9. Process according to claim 8, **characterized in that** the sulfonating agent, in particular concentrated sulfuric acid and/or oleum, is used in relation to the polymeric starting material to be sulfonated in weight-based ratios of sulfonating agent to polymeric starting material in the range from 0.2:1 to 2:1, in particular in the range from 0.4:1 to 1.5:1, and/or **in that** the weight ratio of polymer to oleum 20 % is up to about 1:1 or more, and/or **in that** the weight ratio of polymer to oleum 20 % to sulfuric acid is about 1:1:0.5.

10. Process according to claim 8 or 9, **characterized in that** the starting material used comprises polymer granules, in particular polymer spherules, based on styrene and divinylbenzene, and/or **in that** the starting material used comprises precursors of ion exchanger resins.

11. Process according to one or more of the preceding claims, **characterized in that** the polymer granules, in particular polymer spherules, are porous, in particular macroporous, and/or gellike.

12. Process according to any one of the preceding claims, **characterized in that** the individual temperature zones are assigned separate and/or independent takeoff means, so that the process gases from the different temperature zones are separated and/or separately collected, and/or **in that** the smoldering apparatus comprises at least one lock, in particular between individual successive temperature zones and/or within individual temperature zones, preferably at least between the second and third temperature zones, so that there is at least essentially no mixing through of process gases from different temperature zones between which at least one lock is disposed, and/or so that the acidic process gases from the second temperature zone are not mixed with the other process gases and can be collected separately, if appropriate followed by disposal or reprocessing with subsequent recycling.

13. Process according to any one of the preceding claims, **characterized in that** the process control is controlled by setting the temperature profile in the individual temperature zones and/or by setting the speed at which the starting material moves through the temperature zones of the smoldering apparatus, and/or **in that** the entire residence time of the starting material in the smoldering apparatus is in the range from 0.1 to 5 hours, in particular in the range from 0.25 to 4 hours and preferably in the range from 0.5 to 3 hours.

14. Process according to any one of the preceding claims, **characterized in that** the first temperature zone is operated at temperatures in the range from 50 to 200 °C, in particular in the range from 75 to 175 °C and preferably in the range from 100 to 150 °C, and/or **in that** the second temperature zone is operated at temperatures in the range from 100 to 500 °C, in particular in the range from 150 to 450 °C, and/or **in that** the third temperature zone is operated at temperatures above 400 °C, in particular above 450 °C to 500 °C, and/or **in that** the third temperature zone is operated at temperatures in the range from 400 to 1200 °C, in particular in the range from 450 to 1000 °C, preferably in the range from 500 °C to 900 °C and more preferably in the range from 550 to 850 °C.

15. Process according to one or more of the preceding claims, **characterized in that** the smoldered material is subsequently subjected to an activation.

16. Process according to claim 15, **characterized in that** the activation is similarly carried out in the smoldering apparatus or else **in that** the activation is carried out in a distinct apparatus and/or at different locations and/or times than the smoldering.

17. Process according to claim 15 or 16, **characterized in that** the activation is carried out in a conventional manner, in particular wherein the activation is carried out in the presence of customary activating gases, such as oxygen, in particular in the form of air, water vapor and/or carbon dioxide or mixtures of these activating gases, preferably in the presence of a mixture of water vapor and nitrogen, and/or in particular wherein the activation is carried out at temperatures in the range from about 700 to 1200 °C, in particular in the range from about 800 °C to about 1100 °C, preferably in the range from about 850 °C to about 1000 °C and more preferably in the range from about 900 to about 975 °C, and/or in particular wherein the duration of the activation is in the range from about 0.5 to about 20 hours, in particular in the range from about 2 hours to about 15 hours and preferably in the range from about 5 hours to about 10 hours.

## Revendications

1. Procédé pour la préparation de charbon actif sous forme de grains, en particulier sphériques, par carbonisation à basse température de polymères appropriés contenant du carbone sous forme de grains de polymère, en particulier de billes de polymère, qui peuvent être transformées au moins essentiellement en carbone par carbonisation à basse température, comme matière de départ, les grains de polymère, en particulier des billes de polymère, étant mises en mouvement en continu à travers un dispositif de carbonisation à basse température comprenant plusieurs zones de température, de manière telle qu'une transformation au moins essentiellement complète de la matière de départ en carbone est provoquée,
le dispositif de carbonisation à basse température comprenant au moins les zones de température suivantes, dans l'ordre indiqué ci-dessous:
a) le cas échéant une première zone de température ("zone de sulfonation"), dans laquelle, au cas où la matière de départ ne contient pas de groupes conduisant lors de sa décomposition thermique à des radicaux libres et donc à des réticulations, en particulier pas de groupes acides forts tels que des groupes acide sulfonique ou alors dans le cas où ces groupes doivent encore être introduits en plus dans la matière de départ, ces groupes sont introduits dans la matière de départ, en particulier par sulfonation;
b) une deuxième zone de température ("zone de précarbonisation à basse température" ou "zone de gaz acides"), présentant de préférence une température moyenne plus élevée que celle de la première zone de température, les groupes conduisant lors de leur décomposition thermique à des radicaux libres et donc à des réticulations, en particulier des groupes acides forts, tels que des groupes acide sulfonique, étant dissociés de la matière de départ dans la deuxième zone de température, de manière telle qu'une carbonisation à basse température et/ou une décomposition thermique de la matière de départ démarre, de préférence avec réticulation des polymères et/ou formation de carbone;
c) une troisième zone de température ("zone de post-carbonisation"), présentant de préférence une température moyenne supérieure à celle de la deuxième zone de température, une carbonisation plus poussée de la matière de départ provenant de la deuxième zone de température étant réalisée dans la troisième zone de température, de manière telle qu'une transformation au moins essentiellement complète de la matière de départ en carbone est provoquée,
les différentes zones de température étant contrôlées séparément et/ou indépendamment les unes des autres.

2. Procédé selon la revendication 1, **caractérisé en ce qu'**on utilise comme dispositif de carbonisation à basse température un tube rotatif fonctionnant en continu ou, selon le cas, un four à tube rotatif fonctionnant en continu ou encore **en ce qu'**on utilise comme dispositif de carbonisation à basse température un four à bande, en particulier un four à bande à oxydation.

3. Procédé selon la revendication 1 ou 2, **caractérisé en ce que** les grains de polymère, en particulier des billes de polymère, sont mis en mouvement en continu au moyen d'un dispositif de transport ou de convoyeur, en particulier au moyen d'une bande transporteuse ou d'un convoyeur en mouvement ou d'un corps d'avancement tel qu'une vis sans fin de convoyage, à travers les zones de température du dispositif de carbonisation à basse température, en particulier du tube rotatif ou, selon le cas, du four à tube rotatif ou du four à bande, de manière à provoquer une transformation au moins essentiellement complète de la matière de départ en carbone.

4. Procédé selon l'une quelconque des revendications précédentes, **caractérisé en ce qu'**on utilise comme matière de départ des polymères sous forme de granules de polymère, en particulier des billes de polymère, à base de styrène et de divinylbenzène, qui contiennent des groupes chimiques qui conduisent lors de leur décomposition thermique à des radicaux libres et donc à des réticulations, en particulier des groupes acides forts tels que des groupes acide sulfonique.

5. Procédé selon la revendication 4, **caractérisé en ce que** les groupes chimiques conduisant à des réticulations, en particulier des groupes acides forts tels que des groupes acide sulfonique, sont déjà présents dans la matière de départ et/ou **en ce que** le rapport pondéral polymères/groupes acide sulfonique est d'environ 5:1 à environ 1:1, en particulier d'environ 2:1 à environ 1:1.

6. Procédé selon l'une quelconque des revendications 4 ou 5, **caractérisé en ce qu'**on utilise comme matière de départ des résines échangeuses d'ions, en particulier de préférence des résines échangeuses de cations acides forts, en particulier des résines échangeuses d'ions avec des groupes acide sulfonique et/ou des catalyseurs organiques acides, tels que des catalyseurs pour la synthèse du bisphénol ou pour la synthèse de MTBE.

7. Procédé selon la revendication 6, **caractérisé en ce qu'**on ajoute à la matière de départ, en particulier aux résines échangeuses d'ions et/ou aux catalyseurs organiques forts, avant et/ou pendant la carbonisation, un agent de sulfonation, de préférence SO₃, de préférence sous forme d'acide sulfurique et/ou d'oléum, en particulier en une quantité d'environ 1 à environ 30% en poids de SO₃, en particulier de 5% en poids à environ 25% en poids de SO₃, par rapport au poids sec de la matière de départ.

8. Procédé selon la revendication 4, **caractérisé en ce que** les groupes chimiques, qui conduisent lors de leur décomposition thermique à des radicaux libres et donc à des réticulations, en particulier des groupes acides forts, tels que des groupes acide sulfonique, ne sont introduits dans la matière de départ qu'avant et/ou pendant la carbonisation à basse température, en particulier par sulfonation, de préférence par addition d'un agent de sulfonation, en particulier SO₃, de préférence sous forme d'oléum et/ou d'acide sulfurique, de manière particulièrement préférée sous forme d'oléum mélangé avec de l'acide sulfurique, la matière de départ polymère non sulfonée étant en particulier mise en contact avec l'agent de sulfonation avant son introduction dans le dispositif de carbonisation à basse température, de préférence de manière telle qu'il se produit un mouillage au moins essentiellement complet de la matière de départ polymère par l'agent de sulfonation.

9. Procédé selon la revendication 8, **caractérisé en ce que** l'agent de sulfonation, en particulier de l'acide sulfurique concentré et/ou de l'oléum, est utilisé, par rapport à la matière de départ polymère à sulfoner, en des rapports de quantités par rapport au poids d'agent de sulfonation/matière de départ polymère dans la plage de 0,2:1 à 2:1, en particulier de 0,4:1 à 1,5:1, et/ou en ce que le rapport pondéral polymère/oléum à 20% est de jusqu'environ 1:1 ou plus et/ou **en ce que** le rapport pondéral polymère/oléum à 20%/acide sulfurique est d'environ 1:1:0,5.

10. Procédé selon la revendication 8 ou 9, **caractérisé en ce qu'**on utilise comme matière de départ des granules de polymère, en particulier des billes de polymère, à base de styrène et de divinylbenzène, et/ou **en ce qu'**on utilise comme matière de départ des précurseurs de résines échangeuses d'ions.

11. Procédé selon l'une ou plusieurs des revendications précédentes, **caractérisé en ce que** les granules de polymère, en particulier des billes de polymère, sont poreuses, en particulier macroporeuses et/ou sous forme de gel.

12. Procédé selon l'une quelconque des revendications précédentes, **caractérisé en ce que** les différentes zones de température sont associées à des dispositifs de retrait séparés et/ou indépendants, de manière telle qu'il se produit une séparation et/ou une récupération séparées des gaz de processus provenant des différentes zones de température et/ou **en ce qu'**on a prévu dans le dispositif de carbonisation à basse température au moins un sas, en particulier entre les différentes zones de température successives et/ou dans les différentes zones de température, de préférence au moins entre la deuxième et la troisième zone de température, de manière telle qu'il ne se produit essentiellement pas de mélange des gaz de processus provenant de différentes zones de température entre lesquelles au moins un sas est disposé et/ou de manière telle que les gaz de processus acides provenant de la deuxième zone de température ne sont pas mélangés avec les autres gaz de processus et peuvent être récupérés séparément, le cas échéant suivis d'une évacuation ou d'un retraitement avec recyclage consécutif.

13. Procédé selon l'une quelconque des revendications précédentes, **caractérisé en ce que** la commande de procédé est contrôlée par le réglage du profil de température dans les différentes zones de température et/ou par le réglage de la vitesse à laquelle la matière de départ est mise en mouvement à travers les zones de température du dispositif de carbonisation à basse température et/ou **en ce que** la durée de séjour totale de la matière de départ dans le dispositif de carbonisation à basse température est de 0,1 à 5 heures, en particulier de 0,25 à 4 heures, de préférence de 0,5 à 3 heures.

14. Procédé selon l'une quelconque des revendications précédentes, **caractérisé en ce que** la première zone de température est exploitée à des températures de 50 à 200 °C, en particulier de 75 à 175 °C, de préférence de 100 à 150 °C, et/ou **en ce que** la deuxième zone de température est exploitée à des températures de 100 à 500 °C, en particulier de 150 à 450 °C, et/ou **en ce que** la troisième zone de température est exploitée à des températures supérieures à 400 °C, en particulier supérieures à 450 °C jusqu'à 500 °C, et/ou en ce que la troisième zone de température est exploitée à des températures de 400 à 1200 °C, en particulier de 450 à 1000 °C, de préférence de 500 °C à 900 °C, de manière particulièrement préférée de 550 à 850 °C.

15. Procédé selon l'une ou plusieurs des revendications précédentes, **caractérisé en ce que** la matière carbonisée à basse température est ensuite soumise à une activation.

16. Procédé selon la revendication 15, **caractérisé en ce que** l'activation est réalisée de la même façon dans le dispositif de carbonisation à basse température ou encore **en ce que** l'activation est réalisée dans un dispositif séparé et/ou de manière séparée dans l'espace et/ou dans le temps de la carbonisation à basse température.

17. Procédé selon la revendication 15 ou 16, **caractérisé en ce que** l'activation est réalisée de manière connue en soi, l'activation étant en particulier réalisée en présence de gaz d'activation usuels en soi à cette fin, tels que de l'oxygène, en particulier sous forme d'air, de la vapeur d'eau et/ou du dioxyde de carbone ou des mélanges de ces gaz d'activation, de préférence en en présence d'un mélange de vapeur d'eau et d'azote et/ou l'activation étant en particulier réalisée à des températures d'environ 700 à 1200 °C, en particulier d'environ 800 °C à environ 1100 °C, de préférence d'environ 850 °C à environ 1000 °C, de manière particulièrement préférée d'environ 900 à environ 975 °C, et/ou la durée d'activation étant en particulier d'environ 0,5 à environ 20 heures, en particulier d'environ 2 heures à environ 15 heures, de préférence d'environ 5 heures à environ 10 heures.
